# FASCICULE DE BREVET EUROPEEN

(11) **EP 0 611 205 B1**
(45) Date de publication et mention de la délivrance du brevet: **24.09.1997**
(21) Numéro de dépôt: 94400269.0
(22) Date de dépôt: 08.02.1994
(51) Int. Cl.: D21C 5/02

(54) **Procédé et installation pour la récupération de fibres cellulosiques d'origine papetière**
Verfahren und Vorrichtung zur Rückgewinnung von Altpapierfasern
Process and plant for the recovery of cellulosic fibres from waste paper

(30) Priorité: 09.02.1993 FR 9301409
(43) Date de publication de la demande: 17.08.1994
(73) Titulaire: SIBILLE RECHERCHE, F-94400 Vitry Sur Seine (FR)
(72) Inventeur: Cartier, Noel, F-74350 Cruseilles (FR); Chanzy, Henri, F-38700 La Tronche (FR); Mathevet, François, F-38200 Jardin (FR)
(74) Mandataire: Wagret, Frédéric

(56) Documents cités:
- EP-A- 0 028 658
- WO-A-91/14822
- GB-A- 1 495 029
- Casey J.P. "Pulp and paper; Chemistry and chemical technology" 3ème édition, vol. I, 1980, John Wiley & Sons, New York, pages 568-594.

## Description

La présente invention concerne un procédé, et une installation en vue de la mise en oeuvre de ce procédé, permettant la récupération de fibres cellulosiques présentes dans des rebuts papier, notamment dans des rebuts et déchets à base de papier dit sulfurisé ou tout autre matériau papetier incluant différents types de cellulose selon leur maille cristalline.

L'invention concerne plus particulièrement un procédé et une installation pour sa mise en oeuvre faisant appel à une hydrolyse enzymatique des rebuts papetiers ainsi traités.

L'invention est particulièrement applicable aux produits papetiers sous forme de déchets et rebuts du type sulfurisé. L'invention sera ci-après décrite dans cette application principale.

Cependant, elle peut être applicable à d'autres types de papier, et notamment à des papiers d'applications voisines dans leur utilisation sinon dans leur structure et en toute hypothèse à tout papier difficilement ou pas recyclable à ce jour, tels que des papiers composites incluant de la cellulose I et de la cellulose II. On entend par cellulose I et par cellulose II, des celluloses distinctes par leur maille cristalline et l'homme de l'art trouvera dans la référence "Cellulose and Cellulose derivatives", by Emil OTT, Harold M. SPURLIN, Mildred W. GRAFFLIN, Interscience Publishers, Inc. 1954, page 231, des éléments d'informations complémentaires à ce sujet. En résumé, l'invention est susceptible d'être appliquée à des matériaux à base de cellulose ayant subi un traitement en vue de rendre le papier propre à un usage spécifique. Ceci résultant, de façon schématique, en une structure comprenant des fibres cellulosiques noyées dans une matrice de cellulose appelée amorphe (ou reprécipitée).

On sait que le papier sulfurisé est obtenu par un traitement de la feuille papetière par passage dans un bain d'acide sulfurique (d'où son nom), suivi de nombreux rinçages.

Ce traitement provoque une attaque du milieu cellulosique avec formation d'une matrice de cellulose qui vient se situer entre les fibres subsistantes. Cette matrice est reprécipitée lors d'un lavage de la feuille, sous forme de cellulose II à dominante amorphe (ci-après appelée cellulose reprécipitée). La structure de la matrice sulfurisée peut se comparer à celle d'un béton dans lequel les agrégats sont noyés dans la masse du ciment. Cette structure et les propriétés avantageuses qu'elle confère au papier sulfurisé deviennent un désavantage lorsque l'on veut récupérer des déchets ou rebuts d'un tel papier en vue de leur recyclage. En effet, les fibres du papier étant noyées dans la masse de cellulose reprécipitée, qui en assurent la cohésion, sont difficilement séparées de l'ensemble du milieu en vue de la reconstitution d'une pâte de récupération.

On a tenté, de façon connue, de récupérer des fibres papetières présentes dans le papier sulfurisé, par une attaque enzymatique. Le brevet britannique GB-A-1 495 029 propose à cet effet la mise en contact et l'immersion de papier sulfurisé dans un milieu contenant des micro-organismes s'attaquant à la cellulose ou des enzymes et notamment des cellulases produites par ces micro-organismes.

Cependant, ce procédé, dont le principe a été publié en 1977, ne semble pas, à la connaissance de la demanderesse, avoir été mis en oeuvre utilement pour des raisons pratiques. Il est révélé en effet que l'attaque enzymatique du papier sulfurisé n'est pas suffisante à elle seule pour permettre la libération des fibres qu'il est souhaitable de récupérer. En outre, le procédé décrit dans ce document ne permet pas d'obtenir des résultats en terme de fiabilité et rentabilité, susceptibles de permettre sa mise en oeuvre de façon industrielle. De plus, ce procédé connu nécessite la présence d'éléments nutritifs pour les micro-organismes; également, l'arrêt du traitement requiert la présence d'une solution spécifique de Na ClO3 pour tuer les micro-organismes, ce qui alourdit la mise en oeuvre du procédé.

On a proposé également, voir Y. AITKEN, F. CADEL et C. VOILLOT CTP-EFP ed. 1988, p. 182, "Constituants fibreux des pâtes, papiers et cartons", de récupérer les fibres par l'utilisation d'acide sulfurique. Cependant, l'opération de neutralisation ultérieure est très longue et fastidieuse, et le papier réalisé à l'aide de fibres traitées par ce procédé connu présente des caractéristiques mécaniques appauvries, notamment de résistance à la déchirure.

Il est connu de WO-A-91/14822 de désencrer des vieux papiers en présence des cellulases.

L'invention décrite dans les revendications 1 et 2 propose un procédé de récupération de déchets et rebuts de papier (notamment sulfurisé) comportant une phase d'attaque enzymatique, en vue de l'hydrolyse au moins partielle de la cellulose reprécipitée, complétée par un traitement mécanique de défibrage.

Selon l'invention, dans le cas préférentiel où l'action mécanique de défibrage, par trituration du milieu traité, est concomitante à l'attaque enzymatique, on multiplie les contacts entre les agents biochimiques en solution et le milieu attaqué, de sorte que l'efficacité des agents enzymatiques se trouve considérablement augmentée. Dans le même temps, l'attaque enzymatique du milieu cellulosique reprécipité facilite, au fur et à mesure de sa progression, la séparation mécanique des fibres de la matrice de cellulose reprécipitée dans lequel elles sont noyées, et on aboutit ainsi, d'une part à une réduction importante dans la consommation d'enzymes, et d'autre part à une accélération importante dans l'obtention d'une suspension fibreuse.

L'invention présente un intérêt économique certain dans la mesure où elle permet, dans des conditions pratiques et de rendement industriel intéressants, d'assurer la récupération des fibres présentes dans les déchets de papier sulfurisé qui jusqu'à présent étaient pratiquement perdus, leur récupération étant possible, soit sous forme de sous-produits du type "frisures" utilisables à titre de matériau de rembourrage ou de conditionnement, soit sous forme de calories par incinération.

L'intérêt d'une récupération des fibres présentes dans ces rebuts et déchets de papier sulfurisé est d'autant plus intéressante que le papier sulfurisé est précisément réalisé généralement à partir de fibres de haute qualité.

Egalement, le recyclage de papier sulfurisé soulève une difficulté d'ordre écologique dans la mesure où la législation devient de plus en plus contraignante à cet égard et tend à réduire, voire interdire, l'emploi de papier non recyclable.

A cet effet, l'invention concerne en premier lieu un procédé de récupération de fibres papetières à partir de déchets ou rebuts de papier (notamment du type sulfurisé), du type comportant une phase d'hydrolyse de la cellulose amorphe (reprécipitée) présente dans lesdits rebuts, caractérisé par les étapes suivantes:
a) on met en contact les rebuts papetiers avec un milieu aqueux contenant des enzymes propres à attaquer la cellulose amorphe en vue de son hydrolyse, ceci pendant un temps suffisant permettant l'imprégnation desdits rebuts papetiers;
b) on maintient ce contact entre les rebuts papetiers et ledit milieu aqueux à une température comprise entre 40 et 65°C, et pendant un temps suffisant pour permettre une hydrolyse limitée à la cellulose amorphe dans laquelle les fibres cellulosiques sont noyées; et
c) on soumet la charge de rebuts papetiers à une action physique de défibrage par trituration mécanique jusqu'à obtention d'une suspension des fibres libérées dans le milieu liquide.

De préférence, la phase de trituration (c) est conduite simultanément avec les phases de macération (a) et (b) ci-dessus.

Alternativement et à titre de variante, la phase de trituration (c) est conduite postérieurement aux phases de macération (a) et (b) ci-dessus.

Plus spécialement, l'attaque hydrolytique de la cellulose amorphe est produite dans un milieu aqueux contenant un complexe enzymatique à base de cellulases.

Avantageusement, les complexes enzymatiques introduits dans le milieu aqueux sont à base d'enzymes produites par des micro-organismes de souche humicola, trichoderma ou aspergillus, et plus spécialement constitués des produits commercialisés sous les marques Novozym 342, Celluclast 1,5 L et SP 476 par la Société Novo-Nordisk.

De préférence, le milieu de macération est maintenu à une température comprise entre 45 et 60°C à un pH voisin de la neutralité, compris entre 6 et 8 pour la solution dénommée Novozym 312 et SP 476 et voisin de 5 pour la solution dénommée Celluclast.

Préférentiellement, la concentration du complexe enzymatique, sous forme liquide, est comprise entre 5 et 20 litres de complexe enzymatique par tonne de papier à traiter, ledit complexe enzymatique étant en solution dans le milieu de base liquide constitué d'eau et présentant une activité donnée et fonction de la solution choisie.

Avantageusement, le temps de macération en vue la mise en contact du papier avec le milieu enzymatique en phase liquide est compris entre 0,5 et 48 heures, et de préférence compris entre 0,5 et 12 heures.

Selon une forme de réalisation préférée, le procédé est conduit en continu par passage de l'eau ou de la masse successive des rebuts papetiers sur un tapis convoyeur traversant successivement un bain d'imprégnation constitué d'une phase liquide contenant le complexe enzymatique avec acheminement ultérieur de la masse de rebuts papetiers vers une enceinte à température et humidité contrôlées, suivi par l'acheminement en continu de cette masse vers un triturateur.

Avantageusement, le procédé comporte une phase finale (d) de séparation en vue de retirer de la masse traitée les agglomérats de fibres ou pastilles, lesquelles sont recyclées au début du procédé.

De préférence, la phase de séparation est conduite par centrifugation ou tamisage.

Selon une forme de réalisation plus préférentielle, les fibres récupérées sont immédiatement soumises à une phase de préparation papetière impliquant leur élévation en température jusqu'à un niveau de l'ordre de 80°C entraînant une destruction des complexes enzymatiques.

En variante, les fibres récupérées selon le procédé de l'invention qui ne sont pas destinées à être immédiatement introduites dans une phase de préparation papetière, sont soumises à une phase d'inhibition de l'action des enzymes par abaissement de la température jusqu'à un niveau de l'ordre de 4°C. Afin de détruire les enzymes, on procède à une phase de dénaturation irréversible par abaissement du pH jusqu'à un niveau égal ou inférieur à 3 pour les solutions appelées Novozym 342 et SP 476 et égal ou supérieur à 8 pour la solution dénommée Celluclast.

Dans l'une ou l'autre des mises en oeuvre du procédé (phase de trituration (c) postérieure ou concomitante aux phases (a) et (b) d'imprégnation et d'hydrolyse enzymatique), on prévoit avantageusement une phase préalable de conditionnement physique du papier qui est soumis à macération. Il est déchiqueté de façon à être introduit sous forme de particules de faible dimension.

L'invention décrite dans la revendication 15 concerne également une installation en vue de la mise en oeuvre du procédé et caractérisée, selon une première forme de réalisation, en ce qu'elle comporte une cuve de mise en contact de la phase solide constituée des déchets papetiers avec la phase liquide constituée du bain aqueux contenant un complexe enzymatique, un tapis de convoyage traversant le bain aqueux enzymatique, les dimensions de la cuve contenant ledit bain et la vitesse du convoyeur étant prévues pour assurer un temps de contact programmé suffisant pour permettre l'imprégnation du support papetier, le convoyeur aboutissant à une enceinte à température et hydrométrie contrôlées où se déroule l'attaque hydrolytique du papier par le complexe enzymatique, et au-delà à une enceinte de défibrage (par trituration mécanique), notamment du type pulpeur.

En variante, l'invention comprend aussi l'installation décrite dans la revendication 16 qui comporte:
- une première enceinte fermée à agitation, du type pulpeur, pour mise en contact intime du support papetier et du milieu liquide contenant le complexe enzymatique en vue d'un premier défibrage de la masse papetière soumise à une trituration et une hydrolyse. Si le papier sulfurisé est préalablement déchiqueté, cette première étape peut se faire dans un cuvier muni d'un agitateur;
- une seconde enceinte à agitateur pour une phase de macération du milieu papetier dans la phase liquide enzymatique en vue de la poursuite de l'hydrolyse;
- un convoyeur reliant ladite première enceinte à ladite seconde enceinte;
- un dépastilleur-classeur (centrifineur) étant situé en aval de ladite seconde enceinte à agitation pour assurer la séparation au sein du milieu traité des agglomérats fibreux ou pastilles recyclés vers ladite seconde enceinte à agitation pour parfaire l'action de défibrage;
- une troisième enceinte à agitation, à laquelle aboutit le centrifineur, la masse ainsi traitée étant acheminée vers la machine papetière pour production de papier recyclé ou vers une enceinte de stockage.

D'autres caractéristiques et avantages de l'invention ressortiront de la description qui suit et donnée en rapport avec des formes de réalisations présentées à titre d'exemple non limitatif, et en se référant aux dessins annexés dans lesquels:
La figure 1 est un schéma de principe d'une première installation en continu permettant la mise en oeuvre de l'invention; et
La figure 2 est un schéma de principe d'une autre forme de réalisation d'une installation permettant la mise en oeuvre de l'invention.

Ainsi qu'il a été exposé précédemment, les phases de macération, en vue de l'hydrolyse enzymatique d'une part, et trituration en vue du pulpage d'autre part, qui sont toujours associées dans la mise en oeuvre du procédé selon l'invention, peuvent être conduites soit successivement, l'hydrolyse précédant alors le pulpage, soit sensiblement en même temps, le pulpage par trituration étant concomitant à l'hydrolyse enzymatique.

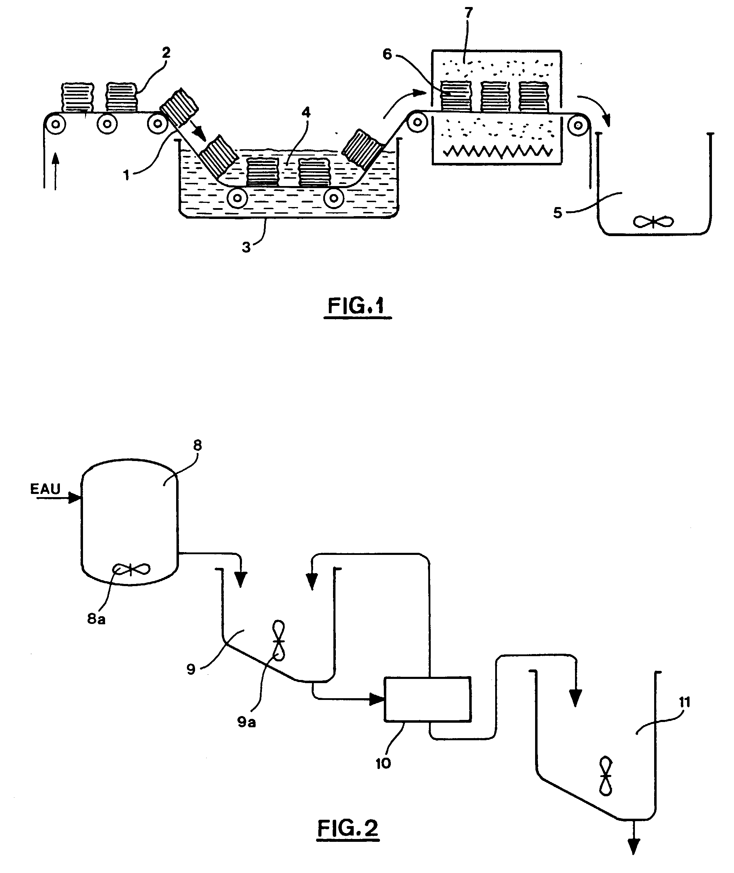

La figure 1 représente une installation permettant le traitement, éventuellement en continu ou pas à pas, de charges successives ou d'une alimentation continue de rebuts papetiers à base de sulfurisés.

Selon cette figure, un convoyeur 1, par exemple à bande, reçoit à un poste de départ les charges de rebuts papetiers sulfurisés, éventuellement sous forme de balles 2, ou d'une alimentation continue.

Le convoyeur achemine les balles de rebuts 2 vers le bac 3 contenant la préparation enzymatique, ci-après spécifiée dans la présentation de l'exemple 4, dans un milieu liquide et constituant le bain d'immersion 4. Les rebuts sont maintenus dans ce bain pendant le temps nécessaire à leur imprégnation. Le papier ainsi imbibé par la composition enzymatique en milieu aqueux est acheminé par le convoyeur vers une enceinte d'étuvage et de stockage 7, maintenue à température et hygrométrie contrôlées. Les charges 6 de rebuts papetiers imprégnées de la composition enzymatique sont maintenues dans cette enceinte pendant le temps nécessaire à l'attaque enzymatique de la masse papetière, attaque s'exerçant préférentiellement sur l'âme interstitielle du papier sulfurisé et constituée de cellulose principalement amorphe et donc moins ordonnée et fragile face à l'attaque enzymatique du bain.

Après le temps nécessaire à l'accomplissement de l'hydrolyse entraînant un affaiblissement du milieu interstitiel soudant entre elles les fibres subsistant dans les rebuts papetiers, les rebuts sont évacués depuis l'enceinte 7 par le convoyeur 1, ou par tout autre moyen approprié, vers un conteneur de désintégration 5 constitué d'une enceinte à agitation. L'action mécanique parfait alors le travail de dislocation hydrolytique précédent, en libérant les fibres insérées dans la masse papetière qui sont ainsi récupérables, depuis le milieu liquide, dans lequel elles sont alors en suspension, en vue d'une utilisation dans un circuit de fabrication de papier.

La figure 2 représente une installation permettant la mise en oeuvre de l'invention selon une variante et utilisable notamment dans un processus impliquant les opérations concomitantes d'hydrolyse enzymatique et trituration mécanique en vue de la séparation des fibres.

Selon cette réalisation, on prévoit une première enceinte ou pulpeur 8, alimenté d'une part en rebuts papetiers et d'autre part relié à une source d'eau portée à la température voulue, et contenant la préparation enzymatique ci-après spécifiée.

Le travail simultané de la matière traitée, à la fois par voie biochimique (action des agents enzymatiques) et mécanique (enceinte d'agitation 8a) pendant le temps nécessaire et dont les termes sont développés dans les exemples détaillés décrits ci-après, permet d'obtenir une masse sensiblement pâteuse dans laquelle l'action conjuguée des agents biochimiques et mécaniques a largement entamé le processus de désengagement des fibres.

Cette masse peut être acheminée alors depuis l'enceinte 8a (hydropulpeur) vers un cuvier 9 pourvu également d'un agitateur 9a où l'action conjuguée de travail mécanique et d'attaque hydrolytique se poursuit.

De là, la masse largement chargée en fibres libérées et en suspension dans le milieu liquide, est dirigée vers une enceinte de séparation 10 par centrifugation ou tamisage, destinée à séparer les fibres individuelles des agglomérats de fibres insuffisamment dégagées (pastilles).

L'enceinte de séparation (appelée centrifineur) permet de classer les fibres utilisables qui sont alors acheminées vers une cuvier de stockage avec agitation (11) avant d'être utilisées soit immédiatement, soit ultérieurement, dans un processus de fabrication de papier.

Les fibres insuffisamment dégagées et formant un agglomérat, appelé "pastille", sont séparées au niveau du centrifineur 10 pour être recyclées en amont, notamment vers le cuvier 9 ou l'action d'hydrolyse se poursuit, ce qui permet de parfaire la libération des fibres individuelles depuis les pastilles recyclées.

On trouvera ci-après quelques exemples de réalisation et de mise en oeuvre du procédé selon l'invention, donnant les paramètres des conditions opératoires préférées.

Il convient de préciser que, selon les expérimentations auxquelles il a été procédé par la demanderesse, il existe une relation entre la durée de la macération (action biochimique d'hydrolyse) et la quantité d'enzymes utilisée (agents d'attaque biochimiques). Il appartiendra donc à l'utilisateur d'adapter les termes et paramètres en fonction les uns des autres. Un milieu plus pauvre en agents enzymatiques (faible concentration dans le milieu liquide) entrainant une durée de traitement prolongée, tandis que si l'on veut privilégier le facteur temps, une teneur plus riche en composition enzymatique sera retenue, au détriment cependant de la rentabilité au niveau du bilan matière (emploi et volume).

Les solutions enzymatiques utilisées sont des préparations existant dans le commerce, pour des raisons de commodité d'approvisionnement notamment. Ceci ne constitue qu'une forme préférée. Les solutions enzymatiques peuvent être constituées de cellulase de diverses souches, d'endoglucanase, ou de tout complexe multi-enzymes présentant des activités de type cellulase, glucanase, hemicellulase et pentosanase.

L'utilisation des enzymes par rapport aux micro-organismes présente des avantages nombreux à savoir:
- la possibilité de travailler en milieu très concentré en cellulose;
- diminution du temps de traitement;
- désactivation des enzymes par la chaleur lors du passage sur machine à papier , lors de l'utilisation des fibres recyclées.

Cette opération de désactivation est importante puisqu'elle permet d'éliminer l'étape de traitement chimique qui serait nécessaire pour désactiver, c'est-à-dire tuer, les micro-organismes. On évite ainsi d'avoir recours à des composés tels que de l'hypochlorite de sodium, avec les avantages qui en découlent sur le plan de la sécurité et de la simplification de la mise en oeuvre du procédé.

Le traitement enzymatique présente une meilleure efficacité en réduisant la taille des échantillons de papier à traiter, à l'aide par exemple d'un déchiqueteur, qui présente l'avantage d'une application industrielle relativement aisée.

L'invention permet de recycler le sulfurisé, dans des conditions de traitement avantageux, notamment du point de vue de la durée. En effet, la durée de l'opération est comprise entre 1/2 heure et 48 heures et de préférence entre 1/2 heure et 20 heures.

On donne ci-après quelques éléments d'information concernant les solutions enzymatiques utilisées. Les doses d'enzymes varient de 0,5 à 50 litres, ou éventuellement plus, de préparation commerciale par tonne de papier sec à traiter. La température de traitement pour une activité optimale des enzymes se situe entre 30 et 65°C, et pour des pH compris entre 4 et 8. Le traitement est complété par l'ajout d'une quantité d'enzymes choisis au mélange eau-papier, dont le pH est ajusté, si nécessaire, à l'aide de sulfate d'alumine, d'acide sulfurique ou autres.

La concentration en cellulose de la préparation peut varier de 20 à 400 grammes par litre. Les concentrations élevées sont obtenues par simple imprégnation du papier à l'aide de la solution enzymatique.

On préconise particulièrement deux compositions connues sous les marques commerciales Celluclast et Novozym 342, proposées par la Société Novo-nordisk et décrites dans WO-A-91/14822. Ces compositions se présentent sous la forme de préparations liquides ayant une activité 107 EGU/ml, pour celle dénommée Novozym 342 (issue de la souche humicola insolens) et de 1500 NCU/g pour Celluclast (issue de la souche trichoderma reesei), constituées principalement de cellulases. On peut utiliser de tels complexes enzymatiques dans tous les cas où il est nécessaire de modifier et/ou couper du matériel cellulosique.

Dans l'hypothèse où l'action enzymatique décrite ci-dessus n'est pas suivie immédiatement par un action mécanique, le mélange réactionnel est alors conservé à 4°C afin d'inhiber l'action des enzymes, pour pouvoir être utilisé pour une action mécanique ultérieure en vue de compléter le recyclage.

On donne ci-après des exemples de traitement, à titre indicatif et non limitatif, mettant notamment en évidence la possibilité de fabriquer du papier contenant 100% de fibres récupérées à partir de sulfurisé, par le procédé décrit ci-dessus, ainsi que la mise en application industrielle d'un tel procédé.

### EXEMPLE 1:

### TRAITEMENTS D'HYDROLYSE ET DE DEFIBRAGE SUCCESSIFS

- A 100g de sulfurisé opaque de grammage voisin de 64g/m2, on ajoute 1,5 litre d'eau à 50-55°C, le pH du mélange est ajusté à 4,5-5, par addition d'une solution à 35% de sulfate d'alumine;
- 2ml de la préparation enzymatique de la marque commerciale Celluclast, ayant une activité de 1500 NCU/g, sont alors additionnés lentement au mélange eau-papier, qui est vigoureusement agité;
- la préparation est placée dans une étuve à 55°C;
- après 16 heures d'action enzymatique, sans agitation mécanique, la concentration est ramenée à 50g/l;
- le mélange est ensuite trituré à l'aide d'un désintégrateur de laboratoire, pendant 20 minutes;
- la totalité des fibres présentes dans le sulfurisé de départ sont ainsi récupérées, sous forme d'une suspension, susceptible d'être utilisée pour la fabrication de papier.

### EXEMPLE 2:

### TRAITEMENTS D'HYDROLYSE ET DE DEFIBRAGE SUCCESSIFS

- 90kg de sulfurisé, grammage voisin de 70g/m2 sont traités par lot de 15kg de papier découpés en carré de 15 x 15 cm;
- chaque lot de papier est introduit progressivement dans des récipients de 75 litres contenant 40 litres d'eau à 50°C et 120 ml de solution enzymatique de marque commerciale Novozym 342, ayant une activité de 107 EGU/ml;
- les préparations sont maintenues à 40°C pendant 48 heures dans une chambre chaude;
- au cours du traitement mécanique, la totalité du papier traité est défibrée, par exemple dans un pulpeur de type Black-Clawson de 5m3, contenant environ 2m3 d'eau; une trituration d'une 1/2 heure menée sur cette préparation, à une concentration en cellulose de 4%, conduit à l'obtention d'une suspension fibreuse contenant de nombreuses pastilles de 2-3 mm;
- un dépastillage est effectué sur la pâte par l'intermédiaire de deux passages successifs dans un raffineur à disques (connu en lui-même);
- les fibres ainsi recyclées ont pu être utilisées pour fabriquer du papier contenant 100% de fibres recyclées, selon la méthode de l'invention, à l'aide d'une machine pilote dont la capacité est de 20 m/minute avec une laize de 1m; la température de la feuille est suffisante, de l'ordre de 80°C par exemple, pour rendre inactive les enzymes, par un phénomène de dénaturation irréversible de ces dernières.

### EXEMPLE 3:

### TRAITEMENTS D'HYDROLYSE ET DE DEFIBRAGE SIMULTANES

- 750 kg de sulfurisé standard de grammage compris entre 50 et 60g/m2 sont placés directement dans un pulpeur contenant 15 m3 d'eau (concentration en cellulose de 50g/l);
- le mélange, vigoureusement agité, est porté à une température de 40°C, puis 25 litres de solution enzymatique de marque commerciale Novozym 342 sont ajoutés lentement;
- après deux heures de ce traitement, la pâte ainsi obtenue ne présente que quelques pastilles, la majorité des fibres étant alors récupérable et récupérée;
- cette suspension fibreuse est alors incorporée à des fibres vierges dans une proportion de 10%, et acheminée vers une machine de fabrication de papier.

### EXEMPLE 4:

### TRAITEMENTS D'HYDROLYSE ET DE DEFIBRAGE SUCCESSIFS

Dans cet exemple, on préconise l'installation décrite précédemment en référence à la figure 1. Cet exemple montre la possibilité de conduire un traitement enzymatique avec une concentration en cellulose très élevée, permettant ainsi de diminuer les volumes de stockage. Pour ce faire, on imprègne le sulfurisé à l'aide de la solution enzymatique et on conserve le tout à une température et à un degré d'humidité contrôlés.
- 100 g de sulfurisé de grammage voisin de 70g/m2 sont découpés en feuilles de format standard;
- les feuilles sont ensuite plongées quelques secondes dans un bac 3 contenant un bain 4 d'un litre d'eau et 5,1 ml de préparation enzymatique de marque commerciale Novozym 342;
- elles sont ensuite placées dans des sacs de polyéthylène 6 fermés hermétiquement afin de conserver une humidité suffisante, et disposés dans une étuve 7 à 50°C;
- après 40 heures de réaction, elles sont défibrées, en 10 mn, à l'aide d'un désintégrateur 5, à une concentration en cellulose de 5%;
- la totalité des fibres est ainsi récupérée sous forme d'une suspension fibreuse homogène ne contenant pas de pastille.

Ce procédé enzymatique de recyclage de sulfurisé a permis de fabriquer du papier contenant 100% de fibres recyclées et qui présente les caractéristiques qui sont résumées dans le tableau 1 ci-après, en comparaison avec un buvard conventionnel destiné à être sulfurisé.

### ETUDE COMPARATIVE PAPIER BUVARD CONVENTIONNEL/SULFURISE RECYCLE

**TABLEAU N° 1**

| | UNITES | Formettes BUVARD provenance St SEVERIN | Formettes SULFURISE RECYCLE St SEVERIN |
|---|---|---|---|
| GRAMMAGE | g/m2 | 66 | 64,5 |
| EPAISSEUR | microns | 110 | 115 |
| MAIN (volume massique) | cm3/g | 1,67 | 1,78 |

| MECANIQUE | | | |
|---|---|---|---|
| LONGUEUR DE RUPTURE | Km | 5,1 | 4,1 |
| ALLONGEMENT | % | 2,5 | 1,4 |
| DECHIRURE (indice) | | 630 | 540 |
| ECLATEMENT (indice) | | 3,1 | 2,0 |
| RIGIDITE | mN | 2,9 | 2,5 |

| OPTIQUE | | | |
|---|---|---|---|
| BLANCHEUR | % | 87 | 88,5 |
| OPACITE | % | 83,5 | 80 |

| BARRIERES | | | |
|---|---|---|---|
| COBB EAU | g/m2 | Non collé | Non collé |
| POROSITE BENDTSEN | ml/min | 2600 | 650 |
| | | | |

### EXEMPLE 5:

### TRAITEMENTS D'HYDROLYSE ET DE DEFIBRAGE SIMULTANES

Cet exemple est conduit en utilisant l'installation de la figure 2.
- 300 kg de sulfurisé véritable de différents grammages (de l'ordre de 60g/m2) sont placés dans un pulpeur contenant 4m3 d'eau à 59°C (pH=7) et 18 litres de solution enzymatique de marque commerciale Novozym 342;
- le mélange est trituré dans un hydropulpeur 8, à 57°C pendant 3/4 d'heure et pourvu de moyens d'agitation 8a;
- après ce traitement, les morceaux de papier, ayant une taille à l'origine pouvant aller jusqu'à 1m, sont réduits à des morceaux de papier de quelques centimètres;
- la pâte est envoyée dans un cuvier 9, puis dans un centrifugateur ou centrifineur 10, jouant le rôle de dépastilleur-classeur, avant d'être stockée. Le dépastilleur élimine les amas de fibres et le classeur renvoie les pastilles trop résistantes dans le cuvier 9, où l'action enzymatique se poursuit. Cette opération diminue très nettement le nombre des pastilles résiduelles, leur taille n'est alors plus que de quelques millimètres;
- avant passage sur machine de fabrication de papier, à l'aide des fibres recyclées, la préparation peut être conservée pendant plusieurs jours, à condition de désactiver les enzymes, c'est-à-dire de les dénaturer irréversiblement, par abaissement du pH au voisinage de 3.

Le procédé mis en oeuvre selon l'exemple 5, a permis de réaliser, sur une machine à papier industrielle de plus de 2m de laize et à une vitesse de 270m/mn, du papier crêpé de grammage 45g/m2, contenant 100% de fibres recyclées selon cet exemple.

### EXEMPLE 6

### TRAITEMENTS D'HYDROLYSE ET DE DEFIBRAGE SIMULTANES

Le mode opératoire suivi est identique à celui décrit dans l'exemple 5, seule la quantité d'enzymes et le temps de traitement dans le pulpeur, ont été modifiés. Selon cet exemple, 4,5l de solution enzymatique de marque commerciale Novozym 342 ont été utilisés pour traiter 300 kg de sulfurisé, avec un temps de trituration dans le pulpeur de 4,5 heures.

Les exemples ci-dessus montrent que la conduite des opérations d'hydrolyse et de défibrage simultanément, entraîne une réduction substantielle du temps requis.

En effet, la désagrégation de la structure papetière par action mécanique est rendue possible et facilitée par l'attaque du milieu interstitiel de cellulose amorphe soudant et liant les fibres, mais dans le même temps cette désagrégation par action physique ouvre aux agents biochimiques de nouveaux sites d'attaque qui subiront un affaiblissement, rendant possible ponctuellement le désengagement des fibres et la pénétration de l'agent biochimique encore vers de nouveaux points d'action hydrolytique. De sorte que chacune des actions aide l'autre et reçoit une aide en retour. Le gain de temps est substantiel.

Pour obtenir un défibrage de qualité identique, pour un sulfurisé opaque de grammage voisin de 60g/m2, traité avec une même dose d'enzymes (151 de composition commerciale enzymatique par tonne de papier) il faut 16 heures de macération, suivie de 20 minutes d'action mécanique, ou 4,5 heures d'action simultanée en pulpeur, ce qui divise la durée totale du traitement par 4 pour une hydrolyse concomitante à la trituration, par rapport à deux opérations successives.

## Revendications

1. Procédé de récupération de fibres papetières sous forme d'une suspension aqueuse à partir de déchets ou rebuts (2) de papier comportant des fibres cellulosiques noyées dans une matrice de cellulose reprécipitée résultant d'un traitement (lors de la fabrication dudit papier) en vue de rendre ce dernier propre à un usage spécifique, caractérisé par les étapes suivantes :
a) on prépare lesdits rebuts (2) de papier sous forme de charge (6) unitaire ou individuelle;
b) on met en contact la ou lesdites charges (6) de papier avec un milieu (4) aqueux contenant des enzymes propres à attaquer la cellulose reprécipitée en vue de son hydrolyse, ceci pendant un temps suffisant permettant l'imprégnation desdits rebuts papetiers;
c) on évacue la ou lesdites charges (6) dudit milieu aqueux;
d) on dispose la ou lesdites charges (6) dans une atmosphère à température et hygrométrie contrôlées pendant un temps suffisant pour permettre l'hydrolyse enzymatique de la cellule reprécipitée; et
e) on soumet la charge de rebuts papetiers à une action physique de défibrage par trituration mécanique jusqu'à obtention d'une suspension des fibres libérées dans le milieu liquide.

2. Procédé de récupération de fibres papetières sous forme d'une suspension aqueuse à partir de déchets ou rebuts (2) de papier comportant des fibres cellulosiques noyées dans une matrice de cellulose reprécipitée résultant d'un traitement (lors de la fabrication dudit papier) en vue de rendre ce dernier propre à un usage spécifique dans lequel on met en contact les rebuts (2) papiers avec un milieu aqueux (4) contenant des micro-organismes propres à attaquer la cellulose, caractérisé par les étapes suivantes :
a) on met en contact les rebuts papiers avec des enzymes aptes à attaquer la cellulose reprécipitée en vue de son hydrolyse, pendant un temps suffisant pour permettre la mise en contact intime du support papier et du milieu liquide contenant le complexe enzymatique, le mélange milieu liquide et rebut papetier étant soumis à agitation dans une enceinte fermée;
b) on soumet le milieu liquide et le rebut papetier à la sortie de la première enceinte à agitation dans une seconde enceinte pendant un temps suffisant pour obtenir une macération du milieu papetier dans la phase liquide enzymatique en vue de l'hydrolyse;
c) on soumet l'ensemble liquide et rebut papetier, après macération, à une étape de séparation des pastilles en vue de séparer, au sein du milieu traité, des agglomérats fibreux ou pastilles.

3. Procédé selon la revendication 2, caractérisé en ce qu'il comporte en outre les étapes de recyclage à la sortie de l'étape de séparation, en vue de recycler les pastilles ou agglomérats fibreux et soumettre ces derniers à l'étape de macération, en ce qu'il comporte en outre une étape, à la sortie de l'étape de séparation, de défibrage à agitation.

4. Procédé selon la revendication 2, caractérisé en ce que la phase d'agitation (a) est conduite simultanément avec la phase de macération (b).

5. Procédé selon l'une des revendications précédentes, caractérisé en ce que l'attaque hydrolytique de la cellulose est produite dans un milieu (4) aqueux contenant un complexe enzymatique à base de cellulases.

6. Procédé selon la revendication 5, caractérisé en ce que le complexe enzymatique introduit dans le milieu (4) aqueux est à base d'enzymes produits par un micro-organisme de souche humicola, trichoderma ou aspergillus.

7. Procédé selon l'une des revendications précédentes, caractérisé en ce que le milieu de liquide est maintenu à une température comprise entre 45 et 60°C à un pH voisin de la neutralité, et compris entre 4 et 8.

8. Procédé selon l'une des revendications précédentes, caractérisé en ce que la concentration de complexe enzymatique, sous forme liquide, par rapport au poids de papier sec traité, est comprise entre 5 et 20 litres de complexe enzymatique (ledit complexe étant en solution dans le milieu de base liquide constitué d'eau).

9. Procédé selon la revendication 2, caractérisé en ce que le temps de macération, en vue de la mise en contact du papier avec le milieu enzymatique en phase liquide est compris entre 0,5 et 48 heures, et de préférence entre 0,5 et 12 heures.

10. Procédé selon la revendication 1, caractérisé en ce qu'il est mis en oeuvre en continu, par passage de l'eau, ou de la masse successive des rebuts papetiers, sur un tapis convoyeur traversant successivement un bain d'imprégnation constitué d'une phase liquide contenant le complexe enzymatique avec acheminement ultérieur de la masse de rebuts papetiers vers une enceinte à température et humidité contrôlées, suivie par l'acheminement de ladite masse vers un triturateur.

11. Procédé selon l'une des revendications précédentes, caractérisé en ce que les fibres récupérées sont soumises à la suite de l'action de défibrage à une élévation en température jusqu'à environ 80°C et/ou modification du pH, entraînant une destruction des complexes enzymatiques.

12. Procédé selon l'une des revendications 1 à 10, caractérisé en ce que les fibres récupérées sont soumises à une phase d'inhibition de l'action des enzymes par abaissement de la température jusqu'à un niveau de l'ordre de 4°C.

13. Procédé selon l'une des revendications 2 à 12, caractérisé en ce qu'on prévoit une phase préalable de déchiquetage du papier à recycler.

14. Procédé selon la revendication 5, caractérisé en ce que ledit complexe enzymatique inclut une composition enzymatique connue sous les dénominations commerciales Celluclast ou Novozym 342.

15. Installation en vue de la mise en oeuvre du procédé selon la revendication 1, caractérisé en ce qu'elle comporte successivement (d'amont vers l'aval) :
- une cuve (3) de mise en contact des déchets papetiers avec une phase liquide contenant un complexe enzymatique (4);
- des moyens de maintien (1) des déchets en contact avec le complexe enzymatique, aptes, en fonction des dimensions de la cuve, à permettre un temps de contact suffisant pour assurer l'attaque du complexe enzymatique sur le support papetier;
- une enceinte (7) à température et hydrométrie contrôlées;
- une enceinte de trituration(défibrage) (5);
- des moyens d'acheminement (1) successivement depuis un poste de départ vers la cuve et les moyens de maintien, depuis ces derniers vers l'enceinte à hydrolyse, depuis cette dernière vers l'enceinte de trituration.

16. Installation pour la mise en oeuvre du procédé selon l'une des revendications 2 à 14, caractérisée en ce qu'elle comporte :
- une première enceinte (8) fermée à agitation (du type pulpeur) permettant d'une part l'alimentation en rebuts papetiers et d'autre part relié à une source d'eau, pour mise en contact intime du support papetier et du milieu liquide contenant le complexe enzymatique;
- une seconde enceinte (9) à agitateur pour une phase de macération du milieu papetier dans la phase liquide enzymatique en vue de l'hydrolyse;
- un convoyeur reliant ladite première enceinte à ladite seconde enceinte;
- un moyen de séparation (10) de pastilles étant situé en aval de ladite seconde enceinte à agitation pour assurer la séparation au sein du milieu traité des agglomérats fibreux ou pastilles recyclés vers ladite seconde enceinte à agitation;
- une troisième enceinte (11) à agitation pour parfaire l'action de défibrage, la masse ainsi traitée étant acheminée vers une machine papetière pour production de papier recyclé, ou vers une enceinte de stockage.

## Patentansprüche

1. Verfahren zur Rückgewinnung von Papierfasern in Form einer wässrigen Suspension aus Papierabfällen oder Papierausschuss (2), mit Fasern aus Zellulose, die in einer sich durch eine Behandlung (bei der Herstellung des vorerwähnten Papiers) ergebenden wiederausgefällten Zellulosematrix eingebettet sind, um dieses Papier für eine besondere Verwendung geeignet zu machen, gekennzeichnet durch die folgenden Schritte:
a) die Papierabfälle (2) werden in Form einer einheitlichen oder individuellen Charge (6) vorbereitet;
b) die eine oder die mehreren Papierchargen (6) werden mit einem wässrigen Medium (4) in Kontakt gebracht, das Enzyme enthält, die in der Lage sind, die wiederausgefällte Zellulose für ihre Hydrolyse aufzuschließen, und zwar während einer ausreichend langen Zeit, um das Vollsaugen der Papierabfälle zu ermöglichen;
c) die eine oder die mehreren Chargen (6) werden aus dem wässrigen Medium entfernt;
d) die eine oder die mehreren Chargen (6) werden während einer ausreichend langen Zeit einer Atmosphäre mit geregelter Temperatur und Luftfeuchtigkeitsmessung ausgesetzt, um die enzymatische Hydrolyse der wiederausgefällten Zellulose zu ermöglichen; und
e) die Charge mit den Papierabfällen wird einem physikalisch wirkenden Vorgang des Zerfaserns durch mechanisches Zermahlen unterzogen, bis sich eine Suspension aus freigesetzten Fasern in dem flüssigen Medium einstellt.

2. Verfahren zur Rückgewinnung von Papierfasern in Form einer wässrigen Suspension aus Papierabfällen oder Papierausschuss (2) mit Fasern aus Zellulose, die in einer sich durch eine Behandlung (bei der Herstellung des vorerwähnten Papiers) ergebenden wiederausgefällten Zellulosematrix eingebettet sind, um dieses Papier für eine besondere Verwendung geeignet zu machen, bei dem die Papierabfälle (2) in Kontakt mit einem wässrigen Medium (4) gebracht werden, das Mikroorganismen enthält, die in der Lage sind, die Zellulose aufzuschließen, gekennzeichnet durch die folgenden Schritte:
a) die Papierabfälle werden mit Enzymen in Kontakt gebracht, die in der Lage sind, die wiederausgefällte Zellulose für ihre Hydrolyse aufzuschließen, und zwar während einer ausreichend langen Zeit, um einen innigen Kontakt des papiernen Mediums und des den enzymatischen Komplex enthaltenden flüssigen Mediums zu ermöglichen, wobei die Mischung aus flüssigem Medium und Papierabfällen in einem geschlossenen Behälter einer Rührbewegung ausgesetzt wird;
b) das flüssige Medium und die Papierabfälle werden nach dem Verlassen des ersten Behälters für eine ausreichend lange Zeit einer Rührbewegung in einem zweiten Behälter ausgesetzt, um eine Mazeration des papiernen Mediums in der flüssigen enzymatischen Phase für die Hydrolyse zu bewirken;
c) nach der Mazeration wird die gesamte Flüssigkeit und der Papierabfall einem Schritt des Absonderns von Tabletten unterzogen, um faserige Konglomerate bzw. Tabletten innerhalb des behandelten Mediums abzusondern.

3. Verfahren nach Anspruch 2, dadurch gekennzeichnet, dass es außerdem nach dem Schritt des Absonderns die Schritte des Rückführens umfasst, um die Tabletten bzw. faserigen Konglomerate wiederzuverwerten und letztere dem Schritt der Mazeration zu unterziehen, und dass es außerdem nach dem Schritt des Absonderns einen Schritt des Zerfaserns durch Rühren umfasst.

4. Verfahren nach Anspruch 2, dadurch gekennzeichnet, dass die Phase des Rührens (a) gleichzeitig mit der Phase der Mazeration (b) durchgeführt wird.

5. Verfahren nach einem der vorhergehenden Ansprüche, dadurch gekennzeichnet, dass das hydrolytische Aufschließen der Zellulose in einem wässrigen Medium (4) stattfindet, das einen enzymatischen Komplex auf Cellulasebasis enthält.

6. Verfahren nach Anspruch 5, dadurch gekennzeichnet, dass der in das wässrige Medium (4) eingebrachte enzymatische Komplex auf der Grundlage von Enzymen gebildet ist, die durch einen Mikroorganismus vom Stamm Humicola, Trichoderma oder Aspergillus erzeugt worden sind.

7. Verfahren nach einem der vorhergehenden Ansprüche, dadurch gekennzeichnet, dass das flüssige Medium auf einer zwischen 45 und 60°C liegenden Temperatur bei einem annähernd neutralen, zwischen 4 und 8 liegenden pH-Wert gehalten wird.

8. Verfahren nach einem der vorhergehenden Ansprüche, dadurch gekennzeichnet, dass die Konzentration des enzymatischen Komplexes in flüssiger Form in bezug auf das Gewicht von behandeltem trockenem Papier zwischen 5 und 20 Litern des enzymatischen Komplexes liegt (wobei sich der Komplex in dem flüssigen, aus Wasser bestehenden Medium in Lösung befindet).

9. Verfahren nach Anspruch 2, dadurch gekennzeichnet, dass die Mazerationszeit, um das Papier mit dem enzymatischen Medium in flüssiger Phase in Kontakt zu bringen, zwischen 0,5 und 48 Stunden, vorzugsweise zwischen 0,5 und 12 Stunden liegt.

10. Verfahren nach Anspruch 1, dadurch gekennzeichnet, dass es ununterbrochen durchgeführt wird, mittels durchlaufendem Wasser oder der aufeinanderfolgende Masse von Papierabfällen auf einem Förderband, das nacheinander ein von einer flüssigen, den enzymatischen Komplex enthaltenden Phase gebildetes Tränkbad durchquert mit einem nachfolgenden Weiterleiten der Masse von Papierabfällen zu einem Behälter mit Regelung von Temperatur und Feuchtigkeit, gefolgt von einem Weiterleiten dieser Masse in eine Mahlmaschine.

11. Verfahren nach einem der vorhergehenden Ansprüche, dadurch gekennzeichnet, dass die zurückgewonnenen Fasern im Anschluss an den Vorgang des Zerfaserns einer Erhöhung der Temperatur bis auf ungefähr 80°C und/oder Änderung des pH-Wertes ausgesetzt werden, was zu einer Zerstörung des enzymatischen Komplexes führt.

12. Verfahren nach einem der Ansprüche 1 bis 10, dadurch gekennzeichnet, dass die zurückgewonnenen Fasern einer Phase der Hemmung der Einwirkung der Enzyme ausgesetzt werden, indem die Temperatur bis auf ein Niveau in der Größenordnung von 4°C abgesenkt wird.

13. Verfahren nach einem der Ansprüche 2 bis 12, dadurch gekennzeichnet, dass eine vorausgehende Phase zur Zerkleinerung des wiederaufzubereitenden Papiers vorgesehen wird.

14. Verfahren nach Anspruch 5, dadurch gekennzeichnet, dass der enzymatische Komplex eine enzymatische Mischung umfasst, die unter den Handelsbezeichnungen Cellulast oder Novozym 342 bekannt ist.

15. Vorrichtung zur Durchführung des Verfahrens nach Anspruch 1, dadurch gekennzeichnet, dass sie nacheinander (von oben nach unten bzw. in Durchlaufrichtung) folgendes aufweist:
- eine Bütte (3), um Papierabfälle mit einer flüssigen Phase, die einen enzymatischen Komplex (4) enthält, in Kontakt zu bringen;
- Mittel (1), um die Abfälle zurückzuhalten für einen Kontakt mit dem enzymatischen Komplex, wobei die Mittel, in Abhängigkeit von den Abmessungen der Bütte, in der Lage sind, eine ausreichend lange Kontaktzeit zu ermöglichen, um die Einwirkung des enzymatischen Komplexes auf das papierne Medium zu gewährleisten;
- einen Behälter (7) mit Regelung der Temperatur und der Wassermessung;
- einen Behälter (5) für das Zerfasern (Zermahlen);
- Mittel (1) zur ununterbrochenen Förderung von einer Ausgangsstelle bis zur Bütte und die Mittel zum Zurückhalten, von diesen letzteren bis zum Hydrolysebehälter und von diesem bis zum Behälter für das Zermahlen.

16. Vorrichtung zur Durchführung des Verfahrens nach einem der Ansprüche 2 bis 14, dadurch gekennzeichnet, dass sie folgendes aufweist:
- einen ersten geschlossenen Behälter (8) mit einem Rührwerk (Bauart Pulper), der einerseits die Zufuhr von Papierabfällen ermöglicht und andererseits mit einer Wasserquelle verbunden ist, um das papierne Medium und das flüssige, den enzymatischen Komplex enthaltende Medium in einen innigen Kontakt zu bringen;
- einen zweiten Behälter (9) mit einem Rührwerk für eine Phase der Mazeration des papiernen Mediums in der flüssigen enzymatischen Phase für die Hydrolyse;
- eine den erwähnten ersten und zweiten Behälter miteinander verbindende Fördereinrichtung;
- ein Mittel (10) zum Absondern von Tabletten, das dem zweiten Behälter mit dem Rührwerk nachgeordnet ist, um das Absondern von zu dem zweiten Behälter mit Rührwerk zurückgeführten faserigen Zusammenballungen bzw. Tabletten innerhalb des behandelten Mediums zu gewährleisten;
- einem dritten Behälter (11) mit Rührwerk, um den Vorgang des Zerfaserns zu vollenden, wobei die so behandelte Masse zu einer Papiermaschine, um wiederaufbereitetes Papier herzustellen, oder zu einem Vorratsbehälter weitertransportiert wird.

## Claims

1. Process for recovering paper fibers in the form of an aqueous suspension from paper scraps or waste (2) comprising cellulosic fibers embedded in a reprecipitated cellulose matrix resulting from a treatment (during manufacture of said paper) with a view to rendering the latter suitable for a specific use, characterized by the following steps:
a) preparing said paper waste (2) in the form of unitary or individual charge (6),
b) placing said paper charge or charges (6) in contact with an aqueous medium (4) containing enzymes adapted to attack the reprecipitated cellulose with a view to hydrolysis thereof, for a sufficient time allowing impregnation of said paper waste,
c) evacuating said charge or charges (6) from said aqueous medium,
d) disposing said charge or charges (6) in an atmosphere at controlled temperature and hygrometry for a time sufficient to allow enzymatic hydrolysis of the reprecipitated cell; and
e) subjecting the charge of paper waste to a physical action of fiber separation by mechanical trituration until a suspension of the fibers released in the liquid medium is obtained.

2. Process for recovering paper fibers in the form of an aqueous suspension from paper scraps or waste (2) comprising cellulosic fibers embedded in a matrix of reprecipitated cellulose resulting from a treatment (during manufacture of said paper) with a view to rendering the latter suitable for a specific use, in which the paper waste (2) is placed in contact with an aqueous medium (4) containing micro-organisms adapted to attack the cellulose, characterized by the following steps:
a) the paper waste is placed in contact with enzymes adapted to attack the reprecipitated cellulose with a view to hydrolysis thereof, for a time sufficient to allow intimate contact of the paper support and the liquid medium containing the enzymatic complex, the liquid medium/paper waste mixture being subjected to stirring in a closed enclosure;
b) on leaving the first enclosure, the liquid medium and the paper waste are subjected to stirring in a second enclosure for a time sufficient to obtain a maceration of the paper medium in the enzymatic liquid phase with a view to hydrolysis;
c) the liquid/paper waste assembly is subjected, after maceration, to a step of separation of the pellets with a view to separating, within the treated medium, fibrous agglomerates or pellets.

3. Process according to Claim 2, characterized in that it further comprises the steps of recycling after the separation step, with a view to recycling the pellets or fibrous agglomerates and subjecting the latter to the maceration step, in that it further comprises a step, after the separation step, of fiber-separation with stirring.

4. Process according to Claim 2, characterized in that the phase of stirring (a) is conducted simultaneously with the phase of maceration (b).

5. Process according to one of the preceding Claims, characterized in that the hydrolytic attack of the cellulose is produced in an aqueous medium (4) containing an enzymatic complex based on cellulases.

6. Process according to Claim 5, characterized in that the enzymatic complex introduced in the aqueous medium (4) is based on enzymes produced by a microorganism of humicola, trichoderma or aspergillus strain.

7. Process according to one of the preceding Claims, characterized in that the liquid medium is maintained at a temperature included between 45 and 60°C with a pH close to neutrality, and included between 4 and 8.

8. Process according to one of the preceding Claims, characterized in that the concentration of enzymatic complex, in liquid form, with respect to the weight of dry paper treated, is included between 5 and 20 litres of enzymatic complex (said complex being in solution in the liquid base medium constituted by water).

9. Process according to Claim 2, characterized in that the maceration time, with a view to placing the paper in contact with the enzymatic medium in liquid phase is included between 0.5 and 48 hours, and preferably between 0.5 and 12 hours.

10. Process according to Claim 1, characterized in that it is carried out continuously, by passage of water, or of the successive mass of paper waste, on a conveyor belt successively traversing an impregnation bath constituted by a liquid phase containing the enzymatic complex with subsequent routing of the mass of paper waste towards an enclosure at controlled temperature and humidity, followed by routing of said mass towards a triturator.

11. Process according to one of the preceding Claims, characterized in that the recovered fibers are subjected, further to the action of fiber separation, to a rise in temperature up to about 80°C and/or modification of the pH, bringing about a destruction of the enzymatic complexes.

12. Process according to one of Claims I to 10, characterized in that the recovered fibers are subjected to a phase of inhibition of the action of the enzymes by reducing the temperature to a level of the order of 4°C.

13. Process according to one of Claims 2 to 12, characterized in that a prior phase of cutting up of the paper to be recycled is provided.

14. Process according to Claim 5, characterized in that said enzymatic complex includes an enzymatic composition known under the trade names Celluclast or Novozym 342.

15. Installation for carrying out the process according to Claim 1, characterized in that it successively comprises (from upstream to downstream):
- a vat (3) for bringing paper waste into contact with a liquid phase containing an enzymatic complex (4);
- means (1) for maintaining the waste in contact with the enzymatic complex, adapted, as a function of the dimensions of the vat, to allow a sufficient contact time to ensure the attack of the enzymatic complex on the paper support;
- an enclosure (7) with controlled temperature and hydrometry;
- a trituration (fiber separation) enclosure (5);
- means (1) for successive routing from a starting station towards the vat and from the vat towards the holding means, from the latter towards the hydrolysis enclosure, from the latter towards the trituration enclosure.

16. Installation for carrying out the process according to one of Claims 2 to 14, characterized in that it comprises:
- a first closed enclosure (8) with stirring (of the pulper type) allowing on the one hand supply of paper waste and on the other hand connected to a source of water, for placing the paper support and the liquid medium containing the enzymatic complex in intimate contact;
- a second enclosure (9) with stirrer for a phase of maceration of the paper medium in the liquid enzymatic phase with a view to hydrolysis;
- a conveyor connecting said first enclosure to said second enclosure;
- a means (10) for separation of pellets being located downstream of said second enclosure with stirring to ensure separation within the treated medium of the fibrous agglomerates or pellets recycled towards said second enclosure with stirring;
- a third enclosure (11) with stirring to complete the action of fiber separation, the mass thus treated being routed towards a paper-making machine for the production of recycled paper, or towards a storage enclosure.
